# EUROPÄISCHE PATENTSCHRIFT

(11) **EP 3 386 661 B1**
(45) Veröffentlichungstag und Bekanntmachung des Hinweises auf die Patenterteilung: **11.08.2021**
(21) Anmeldenummer: 16828923.9
(22) Anmeldetag: 25.11.2016
(51) Int. Cl.: B22F 10/20, B22F 10/30, B22F 12/44, B22F 12/46, B22F 12/50

(54) **VORRICHTUNG UND VERFAHREN ZUR HERSTELLUNG EINES DREIDIMENSIONALEN METALLISCHEN FORMKÖRPERS**
DEVICE AND METHOD FOR PRODUCING A THREE-DIMENSIONAL, SHAPED METAL BODY
DISPOSITIF ET PROCÉDÉ DE FABRICATION D'UN CORPS MOULÉ MÉTALLIQUE TRIDIMENSIONNEL

(30) Priorität: 09.12.2015 DE 102015121437
(43) Veröffentlichungstag der Anmeldung: 17.10.2018
(73) Patentinhaber: Werling, Marco, 76764 Rheinzabern (DE)
(72) Erfinder: Werling, Marco, 76764 Rheinzabern (DE)
(74) Vertreter: Christ, Niko
(86) Internationale Anmeldenummer: PCT/DE2016/100551
(87) Internationale Veröffentlichungsnummer: WO 2017/097287

(56) Entgegenhaltungen:
- DE-A1- 10 235 427
- DE-A1-102007 029 052
- DE-A1-102007 040 755
- DE-A1-102013 021 961
- GB-A- 2 440 727
- US-A- 5 993 554
- US-A1- 2014 246 809
- US-A1- 2015 064 047

## Beschreibung

Die vorliegende Erfindung betrifft eine Vorrichtung zur Herstellung eines dreidimensionalen metallischen Formkörpers umfassend eine relativ zu einem Schlitten höhenverstellbare Grundplatte, eine Schlittenführung, einen in dieser Schlittenführung laufenden, die Grundplatte traversierenden Schlitten mit wenigstens einer Materialkammer zum Ausbringen von Metallpulver über der Grundplatte, und wenigstens ein Laserelement zum punktweisen Schmelzen ausgebrachten Metallpulvers, wobei der Schlitten in alternierender Folge einander in Bewegungsrichtung des Schlittens abwechselnde Laserelemente und Materialkammern aufweist, sowie ein entsprechendes Verfahren zur Herstellung einesm metallischen Formkörpers.

Eine solche Lösung ist aus der EP 2 502 729 A1 bereits vorbekannt. Dort wird einem punktförmigen Laser aus zwei benachbarten Kammern heraus Metallpulver vorgelegt, welches der Laser sodann mit einer darunterliegenden Schicht verschmelzen kann, so dass sich die gewünschte Form ergibt. Dies hat den Vorteil, dass Material nur dort aufgebracht wird, wo es benötigt wird. Problematisch ist hierbei aber, dass gerade bei schmalen und wachsenden Strukturen das neu aufgetragene Metallpulver abrieseln wird, so dass es erforderlich ist, entweder in einem langwierigen Abfahren des gesamten Bauraums mit einer punktförmigen Verteilung eine gleichmäßige Schicht aufzutragen und den Laser nur an den gewünschten Punkten einzusetzen, oder nach einer aufgetragenen Schicht eine Metallpulverschicht in einem anderen Verfahren hinzuzufügen, was die Geschwindigkeitsvorteile der vorliegenden Lösung wieder zunichte macht.

Die DE 10 2007 029 142 A1 sieht hingegen einen flächigen Auftrag von Metallpulver vor, wobei eine Vergleichmäßigung der Pulverschicht durch Anlegen einer Spannung erreicht werden soll.

Eine Verstellvorrichtung, mit der ein Laser zum Schmelzen des Metallpulvers abgelenkt werden kann, ist aus der DE 10 2008 000 030 A1 bekannt.

Die US 5,993,554 A beschreibt erneut einen zentralen, punktförmigen Laser, dem das Metallpulver über mehrere Zuführungen vorgelegt wird.

Der traditionelle Weg, einen dreidimensionalen metallischen Formkörper herzustellen, besteht darin, durch ein Trennverfahren wie beispielsweise durch Spanen oder Abtragen den Formkörper aus einem größeren Werkstück herauszuarbeiten und dabei die nicht benötigten Teile zu entfernen. Die hierfür benötigten Arbeitsschritte legen jedoch eine Konstruktion nahe, die nur in bestimmten Grenzen wirklich frei ist. Geschwungene Bohrlöcher, Hinterschneidungen und Hohlräume sind nur unter bestimmten Bedingungen möglich und erfordern zumeist ein Zusammensetzen des Formkörpers aus mehreren Einzelteilen.

Eine Lösung für dieses Problem stellen so genannte additive Verfahren dar, bei denen die herzustellenden Formkörper nicht durch das Entfernen überflüssiger Teile, sondern vielmehr durch das schichtweise Zusammensetzen der gewünschten Partien entstehen. Bei dem Verfahren des so genannten Multi Jet Modeling verfährt beispielsweise ein Druckkopf mit mehreren Düsen über einem zu erzeugenden Gegenstand und bringt einzelne Tröpfchen eines formbaren Materials, beispielsweise Plastik, an der gewünschten Stelle auf, welches im Anschluss daran aushärtet. Die Aushärtung kann beispielsweise durch eine UV-Beleuchtung erfolgen.

Die so genannte Stereolithografie arbeitet damit, dass ein herzustellender Gegenstand in einem flüssigen Kunststoffbad aufgebaut wird, wobei jeweils das Werkstück in die Flüssigkeit abgesenkt und wieder so weit angehoben wird, dass eine geeignete Schichtstärke auf dem Werkstück zu liegen bleibt. Mit einem Wischer wird der flüssige Kunststoff auf dem Werkstück gleichmäßig ver-teilt und dann mithilfe eines Lichtstrahls an den aufzubauenden Punkten so ausgehärtet, dass das Werkstück schichtweise aufgebaut wird.

Ähnlich zu diesem Verfahren wird auch bei der eingangs angesprochenen additiven Konstruktion von metallischen Formkörpern gearbeitet, bei welchen anstelle von flüssigem Kunststoff ein Metallpulver in dünnen Schichten über dem Werkstück aufgefüllt wird und jeweils die oberste Schicht an den gewünschten Stellen mithilfe beispielsweise eines Laserstrahls geschmolzen und mit einer darunter liegenden Schicht verschweißt wird.

Hierzu kann beispielsweise so verfahren werden, dass über ein Hubsystem Metallpulver ausgestoßen und mithilfe eines Verteilinstruments etwa in Form einer Rakel oder eines Wischers über dem Konstruktionsbereich ausgebracht wird, woraufhin ein Laser die neu verteilte Pulverschicht so beaufschlagt, dass die für die geplante Schicht vorgesehenen Punkte verschweißt und damit die nächste Schicht auf das Werkstück aufgebaut wird. Materialbedingt erfordert ein Schichtauftrag damit einen ganz erheblichen Zeitaufwand, da für eine einzelne Schicht der gesamte Konstruktionsraum wenigstens einmal von dem Verteilinstrument überquert werden muss. Hierbei kann die Geschwindigkeit aufgrund der Trägheit des Pulvermaterials nicht beliebig angehoben werden, da es ansonsten zu Verwirbelungen des Materials kommt und ein ungleichmäßiger Auftrag der Materialschichten zu Fehlern im Werkstück führt.

Aufgrund des Zeitbedarfs für die Herstellung einzelner Werkstücke eignet sich insoweit ein solches Verfahren besonders gut für das so genannte Rapid Prototyping, da ohne die Herstellung von Werkzeugen mit relativ geringem Aufwand ein beliebig geformtes Einzelstück hergestellt werden kann. Aufgrund der insoweit aber recht hohen Zeitaufwände im Verhältnis zu der industriellen Massenherstellung eignen sich solche Verfahren in der bekannten Konfiguration nur in Einzelfällen für die dauerhafte Herstellung von Produkten.

Ausgehend hiervon liegt der vorliegenden Erfindung die Aufgabe zu Grunde, bekannte Vorrichtungen und Verfahren zur Herstellung eines dreidimensionalen metallischen Formkörpers dahingehend zu verbessern, dass der Herstellungsvorgang erheblich beschleunigt wird und damit die bekannten Verfahren attraktiver für die Herstellung größerer Mengen von Produkten werden.

Dies gelingt durch eine Vorrichtung zur Herstellung eines dreidimensionalen metallischen Formkörpers gemäß den Merkmalen des Anspruchs 1. Ebenfalls gelingt dies durch ein Verfahren zur Herstellung eines solchen Formkörpers gemäß den Merkmalen des nebengeordneten Anspruchs 7. Sinnvolle Ausge-staltungen dieser Vorrichtung und des Verfahrens können den jeweils zugeordneten Unteransprüchen entnommen werden.

Erfindungsgemäß ist vorgesehen, dass ähnlich dem Stand der Technik eine Schicht aus Metallpulver über einer Grundplatte ausgebracht wird. Dies erfolgt mithilfe eines Schlittens, welcher relativ zu der Grundplatte höhenverstellbar ist, also entweder in einer höhenverstellbaren Schlittenführung gehalten wird oder über einer höhenverstellbaren Grundplatte läuft. Der Schlitten weist hierzu eine oder mehrere Materialkammern auf, aus welchen das Metallpulver über der Grundplatte ausgebracht wird. Darüber hinaus weist der Schlitten wenigstens ein Laserelement auf, mit welchem das ausgebrachte Metallpulver punktweise geschmolzen und mit der darunter liegenden Fläche verschweißt werden kann.

Dadurch, dass das Laserelement direkt auf dem Schlitten angeordnet ist, ist es möglich, den Schlitten mit dem auszubringenden Metallpulver schneller zu verfahren und direkt hinter dem ausgebrachten Metallpulver dessen Verschweißung zeilenweise durchzuführen. Dies führt dazu, dass sogleich nach dem Erreichen eines Endpunkts der Schlitten wieder zurückfahren kann. Eine Wartezeit in dem Endpunkt bis zum vollständigen Durchführen des Laservorgangs entfällt.

Ferner kann dem Schlitten eine zweite Materialkammer zugeordnet sein, so dass sich Materialkammern und Laserelemente streifenweise abwechseln. Dies ermöglicht es, bei einer beispielhaften Anordnung mit zwei Materialkammern und einem dazwischenliegenden Laserelement den Schlitten in beiden Richtungen zu betreiben und dabei bei einem Überfahren der Grundplatte in jeder Richtung einen vollständigen Materialauftrag und einen Schweißvorgang durchzuführen. Eine in Fahrtrichtung vorne liegende Materialkammer wird dabei zunächst das darin enthaltene Metallpulver auf die bestehende Metallpulverschicht und die Oberkante des Werkstücks ausbringen, wonach die unmittelbar hinter der vorne liegenden ersten Materialkammer folgenden Laserelement das soeben ausgebrachte Metallpulver sogleich mit dem Werkstück an den hierfür vorgesehenen Punkten verschweißt. Eine zweite Materialkammer kann hierbei eine weitere Materialschicht im selben Durchgang aufbringen, wobei anschließend noch ein weiteres Laserelement folgen kann. Diese Konfiguration lässt sich beliebig oft wiederholen, wobei insbesondere vorgesehen ist, abschließend eine Materialkammer anzuordnen, um den Schlitten auch wie oben beschrieben auf dem Rückweg rückwärts betreiben zu können.

Die Laserelemente sind vorzugsweise im Einzelnen so gestaltet, dass sie eine vollständige Breite der Grundplatte abdecken können. Die Laserelemente können hierfür einen oder mehrere Laser sowie bedarfsweise Umlenkspiegel aufweisen mit denen sämtliche unterhalb der Laserzeile vorhandenen Punkte erreicht werden können. Durch die Anordnung mehrerer Laser unterhalb des Schlittens ist es möglich, die Arbeitsgeschwindigkeit zu erhöhen, indem jeweils ein Laser einem bestimmten Abschnitt zugeordnet wird. Je kleiner die einem einzelnen Laser zugeordneten Abschnitte sind, desto schneller kann der Schlitten über der Grundplatte verfahren werden.

Allgemein werden die Laser über einen Prozessrechner angesteuert, welcher den schichtweise aufgebauten Plan eines 3-D-Modells des zu erstellenden Werkstücks eingespeichert hat. Der Prozessrechner erteilt insoweit die Befehle für die zeilenweise Ansteuerung der Laser, wobei die Laser zum Erreichen der jeweils gewünschten Punkte entweder selbst in ihrer Richtung verstellbar sind, oder aber mit Umlenkspiegeln arbeiten, die ihrerseits so beweglich sind, dass jeder Punkt in dem Bereich eines Lasers von diesem erreicht werden kann.

Die Materialkammern sind mit einigem Vorteil so gebildet, dass jeweils eine oder mehrere Materialkammern sich in einer Zeile befinden, die sich über die gesamte Breite des Schlittens erstreckt und mit denen eine gleichmäßige Ausbringung des Metallpulvers schichtweise ermöglicht ist. Um eine gleichmäßige Ausbringung des Metallpulvers zu erreichen, können den Materialkammern Vibrationselemente zugeordnet sein, die den Materialaustrag vergleichmäßigen. Als solche Vibrationselemente eignen sich sowohl piezoelektrische Vibrationselemente als auch Exzenterelemente oder andere hierfür üblicherweise geeignete und eingesetzte Aktivatoren.

Mit einigem Vorteil ist dem Bereich eines jeden Laserelements ein Bildgeber zugeordnet, welcher eine Bildaufnahme des von den Lasern abgedeckten Be-reichs aufzeichnet. Hierüber können Auswertungen durchgeführt werden, ob ein Schweißvorgang korrekt durchgeführt worden ist und insoweit eine Qualitätssicherung betrieben werden.

Schließlich ist es auch möglich, die im Stand der Technik bekannten und im Gehäuse oberhalb angeordneten Laser ergänzend vorzusehen, so dass bei einem Materialaustrag durch den Schlitten auch die in Fahrtrichtung letzte Materialkammer bei jedem Durchgang Material über der Grundplatte ausbringt, wobei diese zuletzt ausgebrachte Materialschicht dann von den oben liegenden weiteren Laserelementen verschweißt werden können.

Insoweit sieht das Herstellungsverfahren für einen dreidimensionalen metallischen Formkörper so aus, dass über eine Grundplatte zunächst eine Schicht aus Metallpulver ausgebracht wird. Soweit die Grundplatte selbst nicht Teil des Werkstücks werden soll, können mehrere Metallpulverschichten als Basis ausgebracht werden und erst in einiger Höhe über der Grundplatte mit einer ersten Verschweißung durch die Laser begonnen werden. Soll die Grundplatte hingegen mit dem Werkstück verbunden werden, so kann direkt die erste Metallpulverschicht punktweise mit der Grundplatte verschweißt werden.

In gleicher Weise werden mit dem Schlitten schichtweise Metallpulverschichten ausgebracht und die in jeder Schicht zu dem Werkstück gehörenden Punkte von den dem Schlitten zugeordneten Laserelementen unmittelbar nach dem Ausbringen des Metallpulvers verschweißt. Während eines Durchgangs des Schlittens können mehrere Schichten Metallpulver aufgetragen und verschweißt werden.

Nach jedem Durchgang des Schlittens, bei welchem eine Ausbringung einer Metallpulverschicht erfolgt, wird der Abstand zwischen dem Schlitten und der Grundplatte erhöht, entweder indem der Schlitten angehoben oder aber die Grundplatte gesenkt wird. Nach einem vollständigen Konstruktionsvorgang wird das Werkstück mit oder ohne die Grundplatte entnommen und von dem unverschweißten Metallpulver befreit. Übrig bleibt das nach dem im Prozessrechner gespeicherten Plan konstruierte Werkstück.

Die vorstehend beschriebene Erfindung wird im Folgenden anhand eines Ausführungsbeispiels näher erläutert.

### Es zeigen

Figur 1 eine Vorrichtung zur Herstellung eines dreidimensionalen metallischen Formkörpers in einer seitlichen Querschnittsdarstellung,
Figur 2 eine alternative Vorrichtung zur Herstellung eines dreidimensionalen metallischen Formkörpers in einer seitlichen Querschnittsdarstellung, sowie
Figur 3 eine weitere alternative Vorrichtung zur Herstellung eines dreidimensionalen metallischen Formkörpers in einer seitlichen Querschnittsdarstellung.

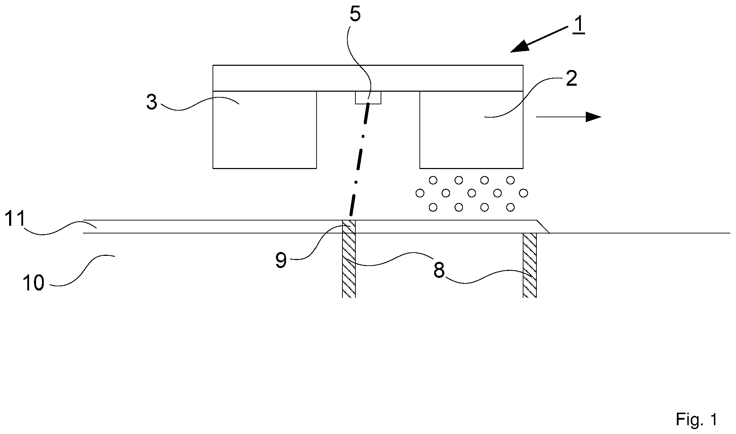

Figur 1 zeigt eine Vorrichtung zur Herstellung eines dreidimensionalen metallischen Formkörpers 8, welche schichtweise durch Lasersintern eines Metallpulvers hergestellt wird. Das Metallpulver wird schichtweise aufgetragen, wobei diejenigen Punkte einer jeden Schicht, welche mit dem Werkstück 8 verbunden werden sollen, in einem Schweißpunkt 9 geschmolzen und mit dem Werkstück 8 verschweißt werden. Durch den gleichmäßigen Metallpulverauftrag versinkt das Werkstück 8 hierbei jedoch immer weiter im Metallpulver, während lediglich die obersten Kanten weiterhin sichtbar und zugänglich bleiben. Das Werkstück 8 befindet sich insoweit in den älteren Metallpulverschichten 10, während in dem betrachteten Moment eine erste Metallpulverschicht 11 aus einer ersten Materialkammer 2 eines Schlittens 1 ausgebracht wird. Der Schlitten 1 bewegt sich hierbei in Richtung des rechts von dem Schlitten 1 gezeigten Pfeils und bringt aus der ersten Materialkammer 2 Metallpulver aus, wobei sogleich nach dem Auftrag der ersten Metallpulverschicht 11 ein Schweißpunkt 9 in der ersten Metallpulverschicht 11 gesetzt wird. Dies erfolgt mithilfe eines ersten Laserelements 5, welches zwischen der ersten Materialkammer 2 und der zweiten Materialkammer 3 an dem Schlitten 1 angeordnet ist.

Nach dem Erreichen eines Endpunkts wird auf dem Rückweg des Schlittens in entgegengesetzter Bewegungsrichtung auf dieser ersten Metallpulverschicht 11 mithilfe einer zweiten Materialkammer 3 eine zweite Metallpulverschicht auf die erste Metallpulverschicht 11 aufgetragen und mithilfe des ersten Laserelements 5 ebenfalls zu einem Schweißpunkt verschweißt.

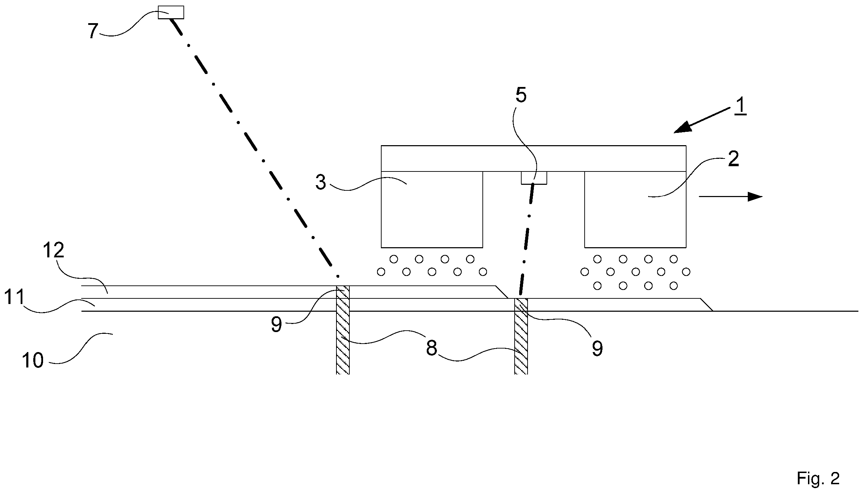

Figur 2 zeigt eine Alternative zu der vorgenannten Lösung, bei welcher eben-falls eine erste Materialkammer 2 und eine zweite Materialkammer 3 vorhanden sind, jedoch in Abweichung zum vorgenannten Verfahren beide Materialkammern 2, 3 gleichzeitig einsetzt. Eine von der ersten Materialkammer 2 ausgebrachte erste Metallpulverschicht 11 wird von dem Laserelement 5 an den gewünschten Stellen an den erforderlichen Schweißpunkten 9 verschweißt, wobei der Schlitten 1 eine von der zweiten Materialkammer 3 ausgebrachte zweite Metallpulverschicht 12 praktisch hinter sich herzieht. Die in der zweiten Metallpulverschicht 12 vorzunehmenden Schweißpunkte 9 werden von einem erhöhten Laserelement 7 aus verschweißt wie dies im Stand der Technik vorgesehen war. Wenngleich bei dieser Konfiguration der Schlitten im Endpunkt gegebenenfalls warten muss, so werden hierdurch mit einem Durchgang zumindest zwei statt nur einer Metallpulverschicht 11, 12 ausgebracht und damit die Geschwindigkeit des Verfahrens deutlich erhöht.

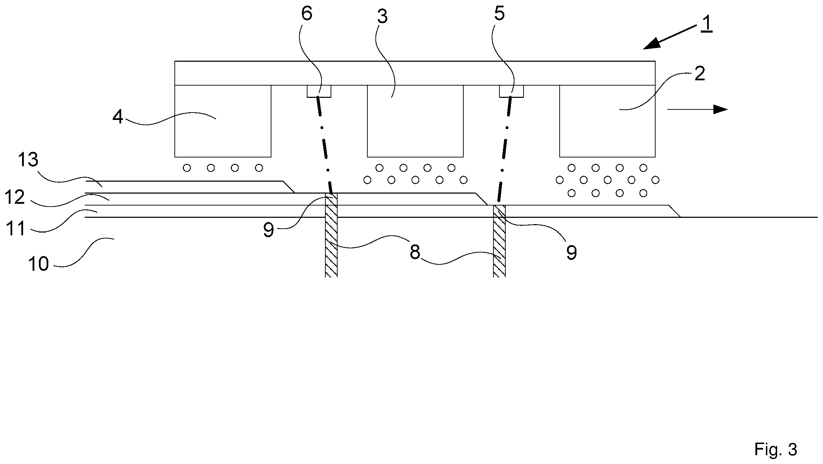

Figur 3 zeigt eine konsequente Weiterentwicklung der vorgenannten Beispiellösungen, mit einem Schlitten 1 mit drei Materialkammern 2, 3, 4, welche insgesamt drei Metallpulverschichten 11, 12, 13 ausbringen. Zwischen dem Materialauftrag zweier benachbarter Schichten wird durch die Laserelemente 5, 6 eine Verschweißung vorgenommen, die letzte Materialkammer kann wahlweise nach dem Prinzip des Beispiels in Figur 1 für den Rückweg vorbehalten werden oder eine Schicht für ein erhöhtes Laserelement 7 auftragen, welches hinter dem Schlitten 1 Schweißpunkte setzt. Eine praktisch beliebige Erweiterung des Schlittens 1 ist hierbei realisierbar, wobei bei Anwendung großer Schichtdicken und der Aufbringung sehr zahlreicher Schichten je Durchgang auch einzeln höhenverstellbare Materialkammern und Laserelemente vorgesehen werden können.

Vorstehend beschrieben sind eine Vorrichtung und ein Verfahren zur Herstellung eines dreidimensionalen metallischen Formkörpers, wobei ein oder mehrere Laserelemente ebenso wie eine oder mehrere Materialkammern auf dem Schlitten mitgeführt werden, um möglichst viele Arbeiten gleichzeitig noch während der Bewegung des Schlittens durchzuführen und dadurch wertvolle Zeit bei der schichtweisen Konstruktion des Werkstücks zu sparen.

### BEZUGSZEICHENLISTE

- 1.: Schlitten
- 2.: erste Materialkammer
- 3.: zweite Materialkammer
- 4.: dritte Materialkammer
- 5.: erstes Laserelement
- 6.: zweites Laserelement
- 7.: erhöhtes Laserelement
- 8.: Werkstück
- 9.: Schweißpunkt
- 10.: ältere Metallpulverschichten
- 11.: erste Metallpulverschicht
- 12.: zweite Metallpulverschicht
- 13.: dritte Metallpulverschicht

## Patentansprüche

1. Vorrichtung zur Herstellung eines dreidimensionalen metallischen Formkörpers umfassend eine relativ zu einem Schlitten (1) höhenverstellbare Grundplatte, eine Schlittenführung, einen in dieser Schlittenführung laufenden, die Grundplatte traversierenden Schlitten (1) mit wenigstens einer Materialkammer (2, 3, 4) zum Ausbringen von Metallpulver über der Grundplatte, und wenigstens ein Laserelement (5, 6, 7) zum punktweisen Schmelzen ausgebrachten Metallpulvers, wobei der Schlitten (1) in alternierender Folge in Bewegungsrichtung des Schlittens (1) jeweils abwechselnd ein Laserelement (5, 6) und eine Materialkammer (2, 3, 4) aufweist, wobei das wenigstens eine Laserelement (5, 6) aus mehreren Lasern gebildet ist, vermittels deren Punkte unterhalb des Schlittens (1) in dessen gesamter Breite, bestrahlbar sind, und eine Materialkammer (2, 3, 4) oder eine Materialkammeranordnung aus mehreren Materialkammern sich über die gesamte Breite des Schlittens (1) erstreckt und eine oder mehrere Ausbringöffnungen zum Ausbringen in der oder den Materialkammern (2, 3, 4) vorgehaltenen Metallpulvers unter der gesamten Breite des Schlittens (1) aufweist.

2. Vorrichtung gemäß Anspruch 1, **dadurch gekennzeichnet, dass** der oder die Laser eines Laserelements (5, 6) entweder selbst richtungsverstellbar oder auf einen richtungsverstellbaren Umlenkspiegel ausgerichtet ist beziehungsweise sind.

3. Vorrichtung gemäß einem der vorhergehenden Ansprüche, **dadurch gekennzeichnet, dass** der oder den Materialkammern (2, 3, 4) wenigstens ein Vibrationselement zur Vergleichmäßigung des Materialaustrags zugeordnet ist.

4. Vorrichtung gemäß Anspruch 3, **dadurch gekennzeichnet, dass** es sich bei dem wenigstens einen Vibrationselement um ein Exzenterelement oder um ein piezoelektrisches Vibrationselement handelt.

5. Vorrichtung gemäß einem der vorhergehenden Ansprüche, **dadurch gekennzeichnet, dass** dem Schlitten (1) wenigstens ein auf die von dem wenigstens einen Laserelement (5, 6) bestrahlten Schweißpunkte (9) unterhalb des Schlittens (1) ausgerichteter und mit einer Auswertevorrichtung datenverbundener Bildgeber zugeordnet ist.

6. Vorrichtung gemäß einem der vorhergehenden Ansprüche, **dadurch gekennzeichnet, dass** weitere Laserelemente (7) zum punktweisen Schmelzen ausgebrachten Metallpulvers oberhalb der Grundplatte erhöht angeordnet sind.

7. Verfahren zur Herstellung eines dreidimensionalen metallischen Formkörpers, wobei ein in einer Schlittenführung über einer Grundplatte verfahrbarer Schlitten (1) mit wenigstens einer Materialkammer (2, 3, 4) versehen ist und während des Überquerens der Grundplatte Metallpulver aus der wenigstens einen Materialkammer (2, 3, 4) ausbringt, wobei dem Schlitten (1) ein der wenigstens einen Materialkammer (2, 3, 4) benachbartes Laserelement (5, 6) zugeordnet ist, vermittels dessen das von der wenigstens einen Materialkammer (2, 3, 4) über der Grundplatte ausgebrachte Metallpulver an von einem mit dem wenigstens einen Laserelement (5, 6) datenverbundenen Prozessrechner vorgegebenen Schweißpunkten (9) oberhalb der Grundplatte geschmolzen und mit umgebenden Materialschichten zu einem Werkstück (8) verschweißt wird, wobei das wenigstens eine Laserelement (5, 6) aus mehreren Lasern gebildet ist, vermittels deren Punkte unterhalb des Schlittens (1) in dessen gesamter Breite, bestrahlt werden, und eine Materialkammer (2, 3, 4) oder eine Materialkammeranordnung aus mehreren Materialkammern sich über die gesamte Breite des Schlittens (1) erstreckt und mittels einer oder mehreren Ausbringöffnungen unter der gesamten Breite des Schlittens (1) in der oder den Materialkammern (2, 3, 4) vorgehaltenes Metallpulver ausbringt.

8. Verfahren gemäß Anspruch 7, **dadurch gekennzeichnet, dass** im Verlauf einer Überquerung der Grundplatte parallel zueinander angeordnete Materialkammern (2, 3, 4) Metallpulver in mehreren Schichten ausbringen, welches zwischen aufeinanderfolgenden Schichten vermittels zwischen benachbarten Materialkammern (2, 3, 4) angeordneter Laserelemente (5, 6) geschmolzen und mit umgebenden Materialschichten zu einem Werkstück (8) verschweißt wird.

9. Verfahren gemäß einem der Ansprüche 7 oder 8, **dadurch gekennzeichnet, dass** Metallpulver in einem von dem Schlitten (1) bereits vollständig überquerten Bereich über der Grundplatte vermittels oberhalb der Grundplatte erhöht angeordneter, zusätzlicher Laserelemente (7) verschweißt wird.

## Claims

1. Device for producing a three-dimensional shaped metal body comprising a base plate, the height of which can be adjusted relative to a carriage (1), a carriage guide, a carriage (1) which runs in this carriage guide and traverses the base plate and has at least one material chamber (2, 3, 4) for discharging metal powder above the base plate, and at least one laser element (5, 6, 7) for melting discharged metal powder point-by-point, wherein the carriage (1) has, in an alternating sequence in the direction of movement of the carriage (1), a laser element (5, 6) and a material chamber (2, 3, 4) alternating in each case,
wherein the at least one laser element (5, 6) is formed by a plurality of lasers, by means of which points below the carriage (1) can be irradiated over the entire width of the carriage, and a material chamber (2, 3, 4) or a material chamber arrangement made of a plurality of material chambers extends over the entire width of the carriage (1) and has one or more discharge openings for discharging the metal powder stored in the material chamber or chambers (2, 3, 4) below the entire width of the carriage (1).

2. Device according to claim 1, **characterized in that** the laser or lasers of a laser element (5, 6) are either themselves directionally adjustable or are oriented toward a directionally adjustable deflection mirror.

3. Device according to any of the preceding claims, **characterized in that** at least one vibration element for making the material discharge uniform is associated with the material chamber or chambers (2, 3, 4).

4. Device according to claim 3, **characterized in that** the at least one vibration element is an eccentric element or a piezoelectric vibration element.

5. Device according to any of the preceding claims, **characterized in that** at least one image generator which is oriented toward the fusion points (9) below the carriage (1) that are irradiated by the at least one laser element (5, 6) and is data-connected to an evaluation device is associated with the carriage (1).

6. Device according to any of the preceding claims, **characterized in that** further laser elements (7) for melting discharged metal powder point-by-point are arranged so as to be elevated above the base plate.

7. Method for producing a three-dimensional shaped metal body, wherein a carriage (1) which can be moved in a carriage guide over a base plate is provided with at least one material chamber (2, 3, 4) and discharges metal powder from the at least one material chamber (2, 3, 4) while traversing the base plate, wherein a laser element (5, 6) which is adjacent to the at least one material chamber (2, 3, 4) is associated with the carriage (1), by means of which laser element the metal powder discharged by the at least one material chamber (2, 3, 4) above the base plate is melted at fusion points (9) above the base plate that are predetermined by a process computer which is data-connected to the at least one laser element (5, 6), and is fused with surrounding material layers to form a workpiece (8),
wherein the at least one laser element (5, 6) is formed by a plurality of lasers, by means of which points below the carriage (1) are irradiated over the entire width of the carriage, and a material chamber (2, 3, 4) or a material chamber arrangement made of a plurality of material chambers extends over the entire width of the carriage (1) and discharges metal powder stored in the material chamber or chambers (2, 3, 4) by means of one or more discharge openings under the entire width of the carriage (1).

8. Method according to claim 7, **characterized in that**, in the course of traversing the base plate, material chambers (2, 3, 4) arranged in parallel with one another discharge metal powder in a plurality of layers, which powder is melted between successive layers by means of laser elements (5, 6) arranged between adjacent material chambers (2, 3, 4) and is fused with surrounding material layers to form a workpiece (8).

9. Method according to either claim 7 or claim 8, **characterized in that** metal powder is fused in a region above the base plate that has already been completely traversed by the carriage (1) by means of additional laser elements (7) which are arranged so as to be elevated above the base plate.

## Revendications

1. Dispositif permettant la fabrication d'un corps moulé métallique tridimensionnel comprenant une plaque de base réglable en hauteur par rapport à un coulisseau (1), un guide de coulisseau, un coulisseau (1) circulant dans ledit guide de coulisseau, traversant la plaque de base, et comportant au moins une chambre de matériau (2, 3, 4) permettant l'extraction de poudre métallique au-dessus de la plaque de base, et au moins un élément laser (5, 6, 7) permettant la fusion ponctuelle de la poudre métallique extraite, dans lequel le coulisseau (1) présente respectivement tour à tour un élément laser (5, 6) et une chambre de matériau (2, 3, 4) en alternance dans la direction de déplacement du coulisseau (1),
dans lequel l'au moins un élément laser (5, 6) est formé de plusieurs lasers, au moyen desquels des points sous le coulisseau (1), sur toute sa largeur, peuvent être irradiés, et une chambre de matériau (2, 3, 4) ou un agencement de chambres de matériau constitué de plusieurs chambres de matériau s'étend sur toute la largeur du coulisseau (1) et présente une ou plusieurs ouvertures d'évacuation permettant l'évacuation de la poudre métallique contenue dans la ou les chambres de matériau (2, 3, 4) sur toute la largeur du coulisseau (1).

2. Dispositif selon la revendication 1, **caractérisé en ce que** le ou les lasers d'un élément laser (5, 6) sont soit réglables eux-mêmes en direction, soit alignés avec un miroir de déviation réglable en direction.

3. Dispositif selon l'une des revendications précédentes, **caractérisé en ce que** la ou les chambres de matériau (2, 3, 4) sont associées à au moins un élément vibrant pour permettre d'égaliser l'évacuation de matériau.

4. Dispositif selon la revendication 3, **caractérisé en ce que** l'au moins un élément vibrant est un élément excentrique ou un élément vibrant piézoélectrique.

5. Dispositif selon l'une des revendications précédentes, **caractérisé en ce que** le coulisseau (1) est associé à au moins un générateur d'images qui est aligné avec les points de soudure (9) irradiés par l'au moins un élément laser (5, 6) sous le coulisseau (1) et qui est connecté par données à un dispositif d'évaluation.

6. Dispositif selon l'une des revendications précédentes, **caractérisé en ce que** d'autres éléments laser (7) permettant la fusion ponctuelle de la poudre métallique extraite sont disposés surélevés au-dessus de la plaque de base.

7. Procédé permettant la production d'un corps moulé métallique tridimensionnel, dans lequel un coulisseau (1) qui peut être déplacé dans un guide de coulisseau sur une plaque de base est pourvu d'au moins une chambre de matériau (2, 3, 4) et, pendant que la plaque de base est traversée, de la poudre métallique est extraite de l'au moins une chambre de matériau (2, 3, 4), dans lequel le coulisseau (1) est associé à un élément laser (5, 6) adjacent à l'au moins une chambre de matériau (2, 3, 4), au moyen duquel la poudre métallique extraite de l'au moins une chambre de matériau (2, 3, 4) au-dessus de la plaque de base est fondue au niveau de points de soudure (9) au-dessus de la plaque de base prédéterminés par un ordinateur industriel connecté par données à l'au moins un élément laser (5, 6), et est soudée à des couches de matériau environnantes afin de former une pièce (8),
dans lequel l'au moins un élément laser (5, 6) est formé de plusieurs lasers, au moyen desquels des points sous le coulisseau (1), sur toute sa largeur, sont irradiés, et une chambre de matériau (2, 3, 4) ou un agencement de chambres de matériau constitué de plusieurs chambres de matériau s'étendant sur toute la largeur du coulisseau (1) et, au moyen d'une ou de plusieurs ouvertures d'extraction sous toute la largeur du coulisseau (1), extrait de la poudre métallique contenue dans la ou les chambres de matériau (2, 3, 4).

8. Procédé selon la revendication 7, **caractérisé en ce qu'**au cours d'une traversée de la plaque de base, des chambres de matériau (2, 3, 4) disposées parallèlement les unes aux autres extraient de la poudre métallique en plusieurs couches, laquelle est fondue entre des couches successives au moyen d'éléments laser (5, 6) disposés entre des chambres de matériau (2, 3, 4) adjacentes et est soudée à des couches de matériau environnantes afin de former une pièce (8).

9. Procédé selon l'une des revendications 7 ou 8, **caractérisé en ce que** de la poudre métallique est soudée dans une zone, déjà complètement traversée par le coulisseau (1), au-dessus de la plaque de base au moyen d'éléments laser supplémentaires (7) disposés de manière surélevée au-dessus de la plaque de base.
